(19) Europäisches Patentamt
European Patent Office
Office européen des brevets

(11) EP 0 585 778 B1

(12) EUROPÄISCHE PATENTSCHRIFT

(45) Veröffentlichungstag und Bekanntmachung des Hinweises auf die Patenterteilung:
**09.10.1996 Patentblatt 1996/41**

(51) Int Cl.[6]: **C08L 69/00**, C08L 101/00, C08L 51/04, C08L 21/02

(21) Anmeldenummer: **93113476.1**

(22) Anmeldetag: **24.08.1993**

(54) **Verfahren zur Herstellung von Pulvermischungen für matte Polycarbonat-Formmassen**

Process for the preparation of powder mixtures for lustreless polycarbonate moulding compositions

Procédé pour la préparation de masse à mouler de polycarbonates délustrée

(84) Benannte Vertragsstaaten:
**DE ES FR GB IT NL**

(30) Priorität: **04.09.1992 DE 4229642**

(43) Veröffentlichungstag der Anmeldung:
**09.03.1994 Patentblatt 1994/10**

(73) Patentinhaber: **BAYER AG**
**51368 Leverkusen (DE)**

(72) Erfinder:
- **Wittmann, Dieter, Dr.**
  **D-51061 Köln (DE)**
- **Schoeps, Jochen, Dr.**
  **D-47800 Krefeld (DE)**
- **Beicher, Horst, Dipl.-Ing.**
  **D-47918 Tönisvorst (DE)**
- **Piejko, Karl-Erwin, Dr.**
  **D-51467 Bergisch Gladbach (DE)**
- **Weirauch, Kurt, Dr.**
  **D-51467 Bergisch Gladbach (DE)**

(56) Entgegenhaltungen:
**EP-A- 0 429 957** **DE-C- 1 170 141**
**US-A- 4 677 162**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 585 778 B1

Printed by Jouve, 75001 PARIS (FR)

**Beschreibung**

Viele Kautschukpolymerisate, wie z.B. Polybutadien, sind mit Polycarbonaten unverträglich. Durch Pfropfpolymerisaton von bestimmten Monomeren, z.B. Styrol/Acrylnitril-Gemischen, auf Polybutadienkautschuke erhält man mit Polycarbonat teilverträgliche ABS-Pfropfpolymerisate.

Thermoplastische Formmassen aus Polycarbonaten und ABS-Polymerisaten sind seit langem bekannt. So beschreibt beispielsweise DE-A 1 170 141 die gute Verarbeitbarkeit von Formmassen aus Polycarbonaten und Pfropfpolymerisaten von Monomermischungen aus Acrylnitril und einem aromatischen Vinylkohlenwasserstoff auf Polybutadien (Emulsions-ABS).

Gemäß US-P 4 624 986 weisen Formmassen aus ABS-Polymerisaten, die nach dem Masse- oder Masse-Suspensions-Verfahren hergestellt wurden, und Polycarbonaten verbesserte Tieftemperatureigenschaften und verminderten Glanz auf.

US-P 4 677 162 hebt die hohe Zähigkeit und den verminderten Glanz von Mischungen aus Polycarbonaten, Masse-ABS-Polymerisaten und Emulsions-ABS-Pfropfpolymerisaten hervor.

Polycarbonat-Formmassen auf Basis von Pfropfpolymerisaten, hergestellt über Emulsionspolymerisation, weisen im allgemeinen eine Oberfläche mit hohem Glanzgrad auf, die für viele Anwendungen (wie Telefongehäuse oder Spielzeugteile) auch gewünscht wird. In manchen Anwendungsbereichen (Kraftfahrzeug-Innenraum) gibt es - bei unlakkierten Anwendungen - jedoch verstärkt auch die Anforderung nach Material, das zu Formteilen mit matter Oberfläche führt. Mit Polycarbonat-Blends auf Basis von Masse-ABS (s.o.) wird man diesen Anforderungen teilweise gerecht, wobei allerdings das Spannungsrißverhalten dieser Blends (gegenüber Kraftstoff-Simulanz, stellvertretend für zahlreiche Chemikalien, die mit einer solchen unlackierten und damit ungeschützten Oberfläche in Kontakt kommen können) nur unzureichend ist.

Überraschenderweise wurde gefunden, daß Polycarbonat-Formmassen, die spezielle Pulvermischungen, z.B. aus Pfropfpolymerisaten auf Kautschuk und Kautschukpolymerisaten enthalten, durch Spritzguß bzw. Extrusion zu Formkörpern mit matter Oberfläche verarbeitet werden können, die ein günstiges Spannungsrißverhalten gegenüber Kraftstoffsimulantien wie beispielsweise Toluol/Isooctan aufweisen.

Bei den speziellen Pulverkompositionen handelt es sich um Gemische aus Polymerisaten und ungepfropften Kautschuken in ganz bestimmten Verhaltnissen, die durch Mischung der entsprechenden Latices, gemeinsame Fällung des resultierenden Mischlatex und anschließende Trocknung in Form von Pulvern erhalten werden.

Trotz des Einsatzes von ungepfropften Kautschuken kommt es zu keiner Beeinträchtigung der Kerbschlagzähigkeit, was nicht zu erwarten war.

Gegenstand der vorliegenden Erfindung ist demzufolge ein Verfahren zur Herstellung von thermoplastische Formmassen, wobei man die Komponenten

A. 10 bis 99, vorzugsweise 20 bis 90 Gew.-Teile Polycarbonat oder Polyestercarbonat

B. 0 bis 90, vorzugsweise 5 bis 80 Gew.-Teile eines mit Komponente A. verträglichen oder teilverträglichen kautschukfreien Harzes,

C. 0 bis 90, vorzugsweise 5 bis 80 Gew.-Teile eines mit Komponente A. verträglichen oder teilverträglichen kautschukmodifizierten Harzes,

D. 0,5 bis 10 Gew.-Teile, vorzugsweise 1 bis 7,5 Gew.-Teile, besonders bevorzugt 1,5 bis 5 Gew.-Teile, bezogen auf 100 Gew.-Teile aus A + B + C, einer mit Komponente A unvertraglichen Kautschukkomponente mit einer Glasübergangstemperatur kleiner als 0°C, miteinander vermischt,

dadurch gekennzeichnet, daß die Komponente D in Form einer Pulvermischung D* eingesetzt wird, die hergestellt wird aus

a. 1 bis 50, vorzugsweise 2 bis 30 Gew.-Teilen einer ungepfropften teilchenförmigen Kautschukkomponente mit einer Glasübergangstemperatur < 0°C und einem mittleren Teilchendurchmesser $d_{50}$ von 0,05 bis 5 µm in Latexform, und

b. 50 bis 99, vorzugsweise 70 bis 98 Gew.-Teilen der Komponente B, der Komponente C oder einer Mischung aus Komponenten B und C in Latexform,

wobei die unter a. und b. angegebenen Komponenten zunächst als Latices miteinander vermischt werden, und dann gemeinsam zu einer Pulvermischung D* aufgearbeitet werden, und der Gesamtgehalt der über D* in die Formmassen

eingebrachten Mengen an Kautschukkomponente D, bezogen auf 100 Gew.-Teilen (A+B+C) zwischen 0,5 und 10 Gew.-Teilen liegen muß und der Gesamtgehalt an B, C oder einer Mischung aus B und C inklusive der über D* in die Formmassen eingebrachten Mengen 90 Gew.-Teile, bezogen auf 100 Gew.-Teile (A+B+C), nicht übersteigen darf.

Komponente A

Aromatische Polycarbonate und/oder aromatische Polyestercarbonate gemäß Komponente A sind literaturbekannt oder nach literaturbekannten Verfahren herstellbar (Zur Herstellung aromatischer Polycarbonate siehe beispielsweise Schnell, "Chemistry and Physics of Polycarbonates", Interscience Publishers, 1964, sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z.B. DE-OS 3 007 934).

Die Herstellung aromatischer Polycarbonate und/oder aromatischer Polyestercarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen, und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (I)

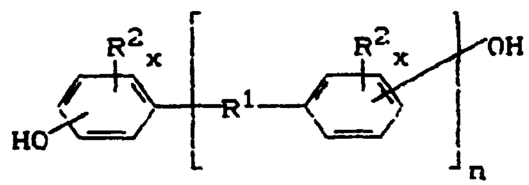

(I)

wobei

$R^1$ eine Einfachbindung, ein $C_1$-$C_5$-Alkylen, $C_2$-$C_5$-Alkyliden, $C_5$-$C_6$-Cycloalkyliden, -O-, -SO-,

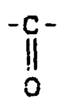 , -S- , 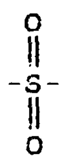 , 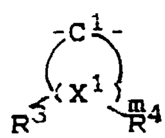

oder ein Rest der Formel (II)

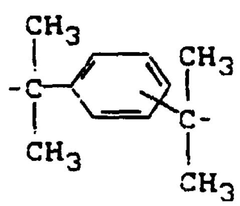

(II)

$R^2$ Chlor, Brom

x 0, 1 oder 2,

n 1 oder 0 sind, und

$R^3$ und $R^4$ für jedes $X^1$ individuell wählbar, unabhängig voneinander Wasserstoff oder $C_1$-$C_6$-Alkyl und

$X^1$ Kohlenstoff und

m eine ganze zahl von 4 bis 7, bevorzugt 4 oder 5 bedeuten.

Bevorzugte Diphenole sind somit Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone, und $\alpha,\alpha$-Bis-(hydroxyphenyl)-diisopropylbenzole sowie deren kernbromierte und/oder kernchlorierte Derivate.

Besonders bevorzugte Diphenole sind Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethyl-heptyl)-phenol. Die Menge an einzusetzenden Kettenabbrechern beträgt im allgemeinen zwischen 0,5 Mol-% und 10 Mol-%, bezogen auf die Molsumme der jeweils eingesetzten Diphenole.

Die thermoplastischen, aromatischen Polycarbonate haben mittlere Gewichtsmittelmolekulargewichte ($\overline{M}_w$, gemessen z.B. durch Ultrazentrifugation oder Streulichtmessung) von 10 000 bis 200 000, vorzugsweise von 20 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzen Diphenole, an drei- oder mehr als dreifunktionellen Verbindungen, beispielsweise solchen mit drei oder mehr als drei phenolischen Gruppen.

Geeignet sind sowohl Homopolycarbonate als auch Copolycarbonate. Zur Herstellung erfindungsgemäßer Copolycarbonate A) können auch 1 bis 25 Gew.-%, vorzugsweise 2,5 bis 25 Gew.-% (bezogen auf die Gesamtmenge an einzusetzenden Diphenolen), Diphenole der Formel (III) verwendet werden,

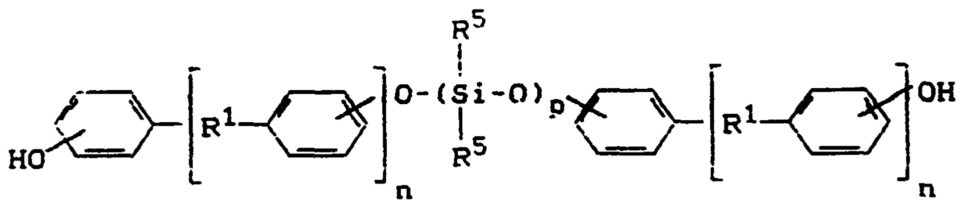

(III)

worin

$R^1$ die für Formel (I) genannte Bedeutung hat,

n 1 oder null ist,

$R^5$ gleich oder verschieden ist und ein lineares $C_1$-$C_{20}$-Alkyl, verzweigtes $C_3$-$C_{20}$-Alkyl oder $C_6$-$C_{20}$-Aryl, vorzugsweise $CH_3$, ist und

p eine ganze Zahl zwischen 5 und 100, vorzugsweise zwischen 20 und 80 ist.

Polydiorganosiloxane mit Hydroxy-aryloxy-Endgruppen gemäß Formel (III) sind bekannt (s. beispielsweise US-Patent 3 419 634) bzw. nach literaturbekannten Verfahren herstellbar. Die Herstellung Polydiorganosiloxanhaltiger Copolycarbonate wird z.B. in DE-OS 3 334 782 beschrieben.

Bevorzugte Polycarbonate sind neben den Bisphenol A-Homopolycarbonaten die Copolycarbonate von Bisphenol A mit bis zu 15 Mol-%, bezogen auf die Molsummen an Diphenolen, an den anderen der bevorzugt bzw. besonders bevorzugt genannten Diphenole, insbesondere an 2,2-Bis(3,5-dibrom-4-hydroxyphenyl)-propan.

Aromatische Dicarbonsäuredihalogenide zur Herstellung der thermoplastischen, aromatischen Polyestercarbonate sind vorzugsweise die Disäuredichloride der Isopthalsäure, Terepthalsäure, Diphenylether-4,4'-dicarbonsäure und der Naphthalin-2,6-dicarbonsäure.

Besonders bevorzugt sind Gemische der Disäuredichloride der Isopthalsäure und der Terepthalsäure im Verhältnis zwischen 1 : 20 und 20 : 1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$-$C_{22}$-Alkylgruppen oder durch Halogenatome substituiert sein können, sowie aliphatische $C_2$-$C_{22}$-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und Falle von Monocarbonsäurechlorid-Kettenabbrechern auf Mole Dicarbonsäuredichloride.

Die aromatischen Polyestercarbonate können auch aromatische Hydroxycarbonsäuren eingebaut enthalten.

Die aromatischen aromatischen Polyestercarbonate können sowohl linear als auch in bekannter Weise verzweigt sein. (S. dazu ebenfalls DE-OS 2 940 024 und DE-OS 3 007 934.)

Als Verzweigungsmittel können beispielsweise 3- oder mehrfunktionelle Carbonsäurechloride, wie Trimesinsäuretrichlorid, Cyanursäuretrichlorid, 3,3', 4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis (2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4''-dihydroxytriphenyl)-methyl]-benzol, in Mengen von 0,01 bis 1,0 Mol% (bezogen auf eingesetzte Diphenole) verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren.

Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen.

Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polyestercarbonate liegt im Bereich 1,18 bis 1,4, vorzugsweise 1,22 bis 1,3 (gemessen an Lösungen von 0,5 g Polyestercarbonat in 100 ml $CH_2Cl_2$-Lösung bei 25°C).

Die thermoplastischen, aromatischen Polycarbonate und Polyestercarbonate können allein oder im beliebigen Gemisch untereinander eingesetzt werden.

Komponente B

Geeignete Komponenten B. sind (Co)Polymerisate, Polyalkylenterephthalate oder Gemische davon.

Geeignet sind (Co)Polymerisate von mindestens einem Monomeren aus der Gruppe der Vinylaromaten, Vinylcyanide (ungesättigte Nitrile), (Meth)Acrylsäure-($C_1$-$C_8$)-Ester, ungesättigte Carbonsäuren sowie Derivate (wie Anhydride und Imide) ungesättigter Carbonsäuren. Insbesondere geeignet sind (Co)Polymerisate aus

B.1 50 bis 99, vorzugsweise 60 bis 95 Gew.-Teilen, Vinylaromaten, kernsubstituierten Vinylaromaten (wie beispielsweise Styrol, $\alpha$-Methylstyrol, p-Methylstyrol, p-Chlorstyrol), Methacrylsäure-($C_1$-$C_4$)-Alkylester (wie zum Beispiel Methylmethacrylat, Ethylmethacrylat) oder Gemische davon, und

B.2 1 bis 50, vorzugsweise 5 bis 40 Gew.-Teilen Vinylcyanide (ungesättigte Nitrile wie Acrylnitril und Methacrylnitril), (Meth)Acrylsäure-($C_1$-$C_8$)-Alkylester (wie zum Beispiel Methylmethacrylat, n-Butylacrylat, t-Butylacrylat), ungesättigte Carbonsäuren (wie Maleinsäure), Derivate (wie Anhydride und Imide) ungesättigter Carbonsäuren (beispielsweise Maleinsäureanhydrid und N-Phenyl-Maleinimid) oder Gemische davon.

Die (Co)Polymerisate B. sind harzartig, thermoplastisch und kautschukfrei.

Besonders bevorzugt ist das Copolymerisat aus B.1 Styrol und B.2 Acrylnitril.

Copolymerisate gemäß Komponente B. entstehen häufig bei der Pfropfpolymerisation der Komponente C. als Nebenprodukte, besonders dann, wenn große Mengen Monomere C.1 auf kleine Mengen Kautschuk C.2 gepfropft werden.

Die erfindungsgemäß einzusetzende Menge an B. bezieht diese Nebenprodukte der Pfropfpolymerisation von C. nicht mit ein.

Die (Co)Polymerisate gemäß B. sind bekannt und lassen sich durch radikalische Polymerisation, insbesondere durch Emulsions-, Suspensions-, Lösungs- oder Massepolymerisation herstellen. Die (Co)Polymerisate gemäß Komponente B. besitzen im allgemeinen Molekulargewichte $\overline{M}_w$ (Gewichtsmittel, ermittelt durch Lichtstreuung oder Sedimentation) zwischen 15.000 und 200.000, vorzugsweise zwischen 30 000 und 175 000.

Als Komponente B. geeignete Polyalkylenterephthalate sind Reaktionsprodukte von aromatischen Dicarbonsäuren (oder ihren reaktionsfähigen Derivaten, z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen und cycloaliphatischen Diolen mit 2 bis 10 C-Atomen nach bekannten Methoden herstellen (Kunststoff-Handbuch, Band VIII, S. 695 ff, Carl Hanser Verlag, München 1973).

Bevorzugte Polyalkylenterephthalate enthalten 80 bis 100, vorzugsweise 90 bis 100 Mol-%, bezogen auf die Dicarbonsäurekomponente, Terephthalsäurereste und 80 bis 100, vorzugsweise 90 bis 100 Mol-%, bezogen auf die Diolkomponente, Ethylenglykol- undloder Butandiol-1,4-Reste. Neben Terephthalsäureresten sind 0 bis 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacin-, Azelain- oder Cyclohexandiessigsäure. Neben Ethylenglykol- und/oder Butandiol-1,4-Resten sind 0 bis 20 Mol-% anderer aliphatischer Diole mit 3 bis 12 C-Atomen oder cycloaliphatischer Diole mit 6 bis 12 C-Atomen enthalten, z.B. Reste von Pentandiol-1,5, Hexandiol-1,6, Cyclohexandi-methanol-1,4, 3-Methylpentandiol-1,3 und -1,6, 2-Ethylhexandiol-1,3, 2,2-Diethylpropandiol-1,3, Hexandiol-2,5, 1,4-Di(β-hydroxyethoxyphenyl)-propan, 2,4-Dihydroxy-1,1,3,3-tetramethylcyclobutan, 2,2-Bis-(3-β-hydroxyethoxyphenyl)-propan und 2,2-Bis-(4-hydroxypropoxyphenyl)-propan (DE-OS 2 407 647, 2 407 776, 2 715 932).

Die Polyalkylenterephthalate können durch Einbau relativ kleiner Mengen 3- oder 4-wertiger Alkohole oder 3- oder 4-basiger Carbonsäuren, wie sie in DE-A 1 900 270 und US-PS 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure (oder deren reaktionsfähigen Derivaten, z.B. deren Dialkylestern) und Ethandiol und/oder Butandiol-1,4 hergestellt worden sind sowie deren Mischungen.

Bevorzugte Polyalkylenterephthalate sind auch Copolyester, die aus mindestens zwei der obengenannten Diole hergestellt sind; besonders bevorzugte Copolyester sind Poly-(ethylenglykol/butandiol-1,4)-terephthalate. In den Copolyestern können die verschiedenen Diolreste in Form von Blöcken oder statistisch verteilt vorliegen.

Die Polyalkylenterephthalate gemäß B. besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Tl.) bei 25°C.

Komponente C

Die erfindungsgemäßen Komponenten C sind Pfropfcopolymerisate von

C.1 10 bis 95 Gew.-Teilen Monomeren auf

C.2 5 bis 90 Gew.-Teile kautschukelastische Grundlagen.

Monomere C.1 sind vorzugsweise Gemische aus der Gruppe

C.1.1 50 bis 99, vorzugsweise 60 bis 95 Gew.-Teilen Vinylaromaten, kernsubstituierten Vinylaromaten (beispielsweise Styrol, α-Methylstyrol, p-Methylstyrol, p-Chlorstyrol), Methacrylsäure($C_1$-$C_4$-Alkylester (beispielsweise Methylmethacrylat, Ethylmethacrylat) oder Gemische daraus und der Gruppe

C.1.2 1 bis 50, vorzugsweise 5 bis 40 Gew.-Teilen Vinylcyanide (ungesättigte Nitrile wie beispielsweise Acrylnitril

und Methacrylnitril), (Meth)Acrylsäure($C_1$-$C_8$)-Alkylester (beispielsweise Methylmethacrylat, n-Butylacrylat, t-Butylacrylat), ungesättigte Carbonsäuren (wie "Maleinsäure), Derivate (wie Anhydride und Imide) ungesättigter Carbonsäuren (beispielsweise Maleinsäureanhydrid und N-Phenyl-Maleinimid) oder Gemische daraus.

Besonders bevorzugte Monomere C.1.1 sind Styrol, α-Methylstyrol und Methylmethacrylat, besonders bevorzugte Monomere C.1.2 sind Acrylnitril, Maleinsäureanhydrid und Methylmethacrylat.

Insbesondere sind C.1.1 Styrol und C.1.2 Acrylnitril bevorzugt.

Für die kautschukmodifizierten Pfropfpolymerisate C. geeignete Kautschuke C.2. sind beispielsweise Dienkautschuke, EP(D)M-Kautschuke, also solche auf Basis Ethylen/Propylen und ggf. Dien, Acrylat-, Polyurethan-, Silikon-, Chloropren- und Ethylen/Vinylacetat-Kautschuke.

Bevorzugte Kautschuke C.2. sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß C.1.1 und C.1.2), mit der Maßgabe, daß die Glasübergangstemperatur der Komponente C. 2 unterhalb 0°C liegt.

Besonders bevorzugt wird reiner Polybutadienkautschuk.

Besonders bevorzugte Polymerisate C. sind z.B. ABS-Polymerisate (Emulsions-, Masse- und Suspensions-ABS), wie sie z.B. in der DE-OS 2 035 390 (= US-PS 3 644 574) oder in der DE-OS 2 248 242 (= GB-PS 1 409 275) bzw. in Ullmann, Enzyklopädie der Technischen Chemie, Bd. 19 (1980) S. 280 ff beschrieben sind.

Der Gelanteil der Pfropfgrundlage C.2 im Pfropfpolymerisat C nach der Pfropfung beträgt mindestens 50 Gew.-% (in Toluol gemessen), der mittlere Teilchendurchmesser $d_{50}$ des Pfropfpolymerisats C 0,05 bis 5 µm, vorzugsweise 0,075 bis 0,6 µm.

Der mittlere Teilchendurchmesser $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

Die Pfropfcopolymerisate C. werden durch radikalische Polymerisation, z.B. durch Emulsions-, Suspensions-, Lösungs- oder Massepolymerisation, vorzugsweise durch Emulsionspolymerisation hergestellt.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C. auch solche Produkte verstanden, die durch Polymerisation der Pfropfmonomere in Gegenwart der Pfropfgrundlage gewonnen werden.

Geeignete Acrylatkautschuke C.2. der Polymerisate C. sind vorzugsweise Polymerisate aus Acrylsäurealkylestern, gegebenenfalls mit bis zu 40 Gew.-%, bezogen auf C.2, anderen polymerisierbaren, ethylenisch ungesättigten Monomeren. Zu den bevorzugten polymerisierbaren Acrylsäureestern gehören $C_1$-$C_8$-Alkylester, beispielsweise Methyl-, Ethyl-, Butyl-, n-Octyl- und 2-Ethylhexylester; Halogenalkylester, vorzugsweise Halogen-$C_1$-$C_8$-alkylester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vernetzenden Monomere beträgt vorzugsweise 0,02 bis 5, insbesondere 0,05 bis 2 Gew.-%, bezogen auf die Pfropfgrundlage C.2.

Bei cyclischen vernetzenden Monomeren mit mindestens 3 ethylenisch ungesättigten Gruppen ist es vorteilhaft, die Menge auf unter 1 Gew.-% der Pfropfgrundlage C.2 zu beschränken. Bevorzugte "andere" polymerisierbare, ethylenisch ungesättigte Monomere, die neben den Acrylsäureestern gegebenenfalls zur Herstellung der Pfropfgrundlage C.2 dienen können, sind z.B. Acrylnitril, Styrol, α-Methylstyrol, Acrylamide, Vinyl-$C_1$-$C_6$-alkylether, Methylmethacrylat, Butadien. Bevorzugte Acrylatkautschuke als Pfropfgrundlage C.2 sind Emulsionspolymerisate, die einen Gelgehalt von mindestens 60 Gew.-% aufweisen.

Weitere geeignete Pfropfgrundlagen gemäß C.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Der Gelgehalt der Pfropfgrundlage C.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Komponente D

Komponente D. ist ein mit A. im wesentlichen unverträglicher, ungepfropfter Kautschuk mit einer Glasübergangstemperatur temperatur unterhalb 0°C. Unverträglich im Sinne dieser Erfindung bedeutet, daß das durch Einmischung von D. in die Schmelze von A. (im üblichen Temperaturbereich der Verarbeitung von A. (im allgemeinen 200-350°C) und mit den üblichen Compoundieraggregaten) erhaltene Mischprodukt keine merkliche Absenkung der Glasübergangstemperatur (Tg) bei A. bzw. keine Anhebung der Tg bei D. aufweist.

Als Kautschukkomponente D. (entspricht a)) geeignet sind alle unter C.2 aufgeführten Produkte, sofern sie mit A. unverträglich sind, also beispielsweise Dienkautschuke, EP(D)M-Kautschuke (also solche auf Basis Ethylen!Propylen und ggf. Dien), Acrylat-, Polyurethan-, Silikon-, Chloropren- und Ethylen/Vinylacetat-Kautschuke, die in Form feinteiliger Suspensionen oder Latices mit Teilchendurchmessern $d_{50}$ von 0,05 bis 5 µm erhältich sind und eine Glasübergangstemperatur unterhalb 0°C aufweisen.

Bevorzugte Kautschuke gemäß D. sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. Styrol), mit der Maßgabe, daß die Glasübergangstemperatur der Komponente D. unterhalb 0°C liegen muß. Besonders bevorzugt wird reiner Polybutadienkautschuk mit einem mittleren Teilchendurchmesser $d_{50}$ von 0,05 bis 5 µm, vorzugsweise 0,075 bis 0,6 µm.

Der Gehalt an D. in den Formmassen beträgt 0,5 bis 10 Gew.-Teile, vorzugsweise 1 bis 7,5 Gew.-Teile, besonders bevorzugt 1,5 bis 5 Gew.-Teile, bezogen auf 100 Gew.-Teile aus A+B+C.

Die Komponente D wird erfindungsgemäß in Form einer Pulvermischung D∗ eingesetzt, die hergestellt wird aus

a. 1 bis 50, vorzugsweise 2 bis 30 Gew.-Teilen einer ungepfropften teilchenförmigen Pfropfgrundlage mit einer Glasübergangstemperatur < 0°C und einem mittleren Teilchendurchmesser $d_{50}$ von 0,05 bis 5 µm in Latexform, und

b. 50 bis 99, vorzugsweise 70 bis 98 Gew.-Teilen Komponente B, Komponente C oder einer Mischung aus B und C.

Als Komponenten b. kommen alle in Latexform anfallenden Polymerisate, die unter B. und C. beschrieben worden sind, in Frage, insbesondere SAN- und ABS-Emulsionspolymerisate, wobei die jeweils zur Herstellung von D∗ benötigten Mengen an b. in den Mengen von B. bzw. C. bereits einbezogen sind, und der Gesamtgehalt des über D∗ in die Formmassen eingebrachten D. im oben genannten Rahmen liegt.

Zur Herstellung der Pulvermischung D∗ werden die Komponenten a. und b. zunächst als Latices miteinander vermischt, und dann gemeinsam durch ein übliches Verfahren (Fällung, Sprühtrocknung etc.) zum Pulver D∗ aufgearbeitet.

Die besten Pulverqualitäten D∗ erhält man, wenn der Anteil an D (in Form des Latex a. eingebracht) in D∗ 2 bis 30 Gew.-Teile beträgt.

Die erhaltenen Formmassen können darüberhinaus weitere bekannte Zusätze wie Stabilisatoren, Pigmente, Entformungsmittel, Fließhilfsmittel. Füll- und Verstärkungsstoffe, Flammschutzmittel und Antistatika in den üblichen Mengen enthalten.

Die erhaltenen Formmassen können hergestellt werden, indem man die Bestandteile in bekannter Weise vermischt und bei erhöhten Temperaturen, vorzugsweise bei 200 bis 350°C, in üblichen Vorrichtungen wie Innenknetern, Extrudern oder Doppelwellenschnecken schmelzcompoundiert oder schmelzextrudiert.

Die erhaltenen Formmassen können zur Herstellung von Formkörpern jeder Art, z.B. durch Spritzgießen, Extrusion oder Extrusionsblasformen, verwendet werden.

Beispiele für Formkörper sind: Gehäuseteile (z.B. für Haushaltsgeräte wie Saftpressen, Kaffeemaschinen, Mixer), Abdeckplatten für das Baugewerbe und insbesondere Automobilteile. Sie werden außerdem für elektrische Geräte, z. B. für Steckerleisten, eingesetzt, weil sie sehr gute elektrische Eigenschaften haben.

Formkörper können auch durch Tiefziehen aus vorher hergestellten Platten oder Folien hergestellt werden.

Beispiele

1. Eingesetzte Komponenten

Angegebene Teile bedeuten Gewichtsteile.

Komponente A

Lineares Polycarbonat auf Basis Bisphenol A mit einer relativen Lösungsviskosität $\eta_{rel}$ = 1,26 bis 1,28, gemessen in Methylenchlorid bei 25°C und in einer Konzentration von 0,5 g/100 ml.

Komponente B

Styrol/Acrylnitril-Copolymerisat mit einem Styrol/Acrylnitril-Gewichts-Verhältnis von 72:28 und einer Grenzviskosität von [η] = 0,55 dl/g (Messung in Dimethylformamid bei 20°C).

Komponente C

wird nicht separat, sondern über Pulver D∗ zugesetzt (vgl. Latex b.1 und b.2).

Pulvermischung D∗

Latex b.1 (vgl. D∗1 bis D∗4)

SAN-Pfropfpolymerisat von 45 Gew.-% Styrol-Acrylnitril-Gemisch (im Gew.-Verhältnis von 72:28) auf 55 Gew.-% teilchenförmiges Polybutadien eines mittleren Teilchendurchmessers ($d_{50}$) von 0,4 µm, erhalten durch Emulsionspolymerisation mit einem Redox-Aktivatorsystem aus Cumolhydroperoxid und Ascorbinsäure (Herstellung analog Beispiel B.I der DE-OS 3 738 143).

Bei dem in D∗ 1 bis D∗4 eingesetzten b.1 handelt es sich um einen mit phenolischen Antioxidantien stabilisierten Latex mit einem Feststoffgehalt von 33,3 Gew.-%.

Latex b.2 (vgl. D∗ 5 bis D∗8)

SAN-Pfropfpolymerisat von 45 Gew.-% Styrol-Acrylnitril-Gemisch (im Gew.-Verhältnis von 72:28) auf 55 Gew.-% teilchenförmiges Polybutadien einer mittleren Teilchengröße ($d_{50}$) von 0,4 µm, erhalten durch Emulsionspolymerisation mit Kaliumperoxodisulfat als Aktivator (Herstellung analog Beispiel B.II der DE-OS 3 738 143).

Bei dem in D∗5 bis D∗8 eingesetzten b.2 handelt es sich um einen mit phenolischen Antioxidantien stabilisierten Latex mit einem Feststoffgehalt von 34,5 Gew.-%.

Latex a.

Latex eines partiell vernetzten, teilchenförmigen Polybutadienkautschuks (Komponente D) mit einem mittleren Teilchendurchmesser von 0,113 µm ($d_{50}$-Wert) und einem Gelgehalt von 97,2 Gew.-%.
Latex a. enthält 36,48 Gew.-% Polymerisatfeststoff.

Herstellung der Pulvermischung D∗

Die Latices a. und b.1 bzw. a. und b.2 werden in den in Tabelle 1 angegebenen Gew.-Verhältnissen in einem 5 l-Gefäß ca. 10 min bei 100 Umdrehungen/min zusammengerührt. Dann wird der polymere Feststoff mit einer wäßrigen Lösung von Essigsäure (1 Gew.-%) und Magnesiumsulfat (1 Gew.-%) bei 90°C gefällt, filtriert und im Vakuum bei 70°C getrocknet.

Die weißen, pulverförmigen Feststoffe D∗1 bis D∗8 fallen in praktisch 100%iger Ausbeute an (bezogen auf die eingesetzten Feststoffmengen aus a. und b.1 bzw. a. und b.2; Zusammensetzungen siehe Tabelle 1:

Tabelle 1

| Zusammensetzung der Komponenten D∗1 bis D∗8 (Gew.-Teile Polymerisatfeststoff) | | | | |
|---|---|---|---|---|
| | Pulvermischung | | | |
| | D∗1 Vergleich | D∗2 | D∗3 | D∗4 |
| Latex a | 0 | 4,4 | 8,9 | 27,4 |
| Latex b.1 | 100 | 95,6 | 91,1 | 72,6 |
| | Pulvermischung | | | |
| | D∗5 Vergleich | D∗6 | D∗7 | D∗8 |
| Latex a | 0 | 4,4 | 8,9 | 27,4 |
| Latex b.2 | 100 | 95,6 | 91,1 | 72,6 |

2. Herstelung und Prüfung der erfindungsgemäßen Formmassen

Die Komponenten A (50 Gew.-Teile), B (20 Gew.-Teile) und D* (30 Gew.-Teile) wurden auf einem 3,5 l Innenkneter bei Temperaturen zwischen 210 und 250°C aufgeschmolzen und homogenisiert (Beispiele 1 bis 8).

Von den Formmassen wurden auf einer Spritzgußmaschine Stäbe der Abmessung 80 x 10 x 4 $mm^3$ (Verarbeitungstemperatur 260°C) hergestellt, an denen die Kerbschlagzähigkeit bei Raumtemperatur (Methode ISO 180 1A) gemessen wurde.

Die Benzinbeständigkeit (Spannungsrißverhalten) wurde an den Flachstäben 80 x 10 x 4 $mm^3$ gemäß DIN 53 449/3 untersucht. Als Kraftstoffsimulanz wurde eine Mischung aus 50 Gew.-% Toluol und 50 Gew.-% Isooctan verwendet. Die Probekörper wurden mittels einer Kreisbogenschablone vorgedehnt und 10 Minuten bei 23°C im Kraftstoffsimulanz gelagert. Die Vordehnung $\varepsilon_x$ betrug 2,4 %. Das Spannungsrißverhalten wurde über die Rißbildung bzw. den Bruch beurteilt. Ein Material weist umso höhere Benzinbeständigkeit auf, je länger es im Testbad aus Toluol/Isooctan bis zum vollständigen Materialversagen (Bruch) gelagert werden kann.

Der Glanzgrad [Angabe in %] wurde an Musterplättchen der Abmessung 60 x 40 x 2 $mm^3$ (Verarbeitungstemperatur 260°C) nach Methode DIN 67 530 (60°, Gerät: Multigloss der Fa. Malinckroft) bestimmt.

Die Eigenschaften erfindungsgemäßer Formmassen finden sich in Tabelle 2.

Tabelle 2

**Eigenschaften der Formmassen**

(Blend aus 50 Gew.-Teilen A, 20 Gew.-Teilen B und 30 Gew.-Teilen D*)

| Formmasse Beispiel | Pulver D* im Blend | Gesamtgehalt an D (reiner Kautschukkomponente) in Formmasse [Gew.-Teile bez. auf Summe A+B+C] | Glanzgrad in % Einstrahlwinkel 60° (DIN 67 530) | Benzinbeständigkeit (DIN 53 449/3) Bruch nach x min bei Vordehnung $\epsilon_R$ = 2,4% | Kerbschlagzähigkeit ISO 180 1A [kJ/m²] |
|---|---|---|---|---|---|
| 1 Vergleich | D*1 | 0 | 95 | 12 | 45 |
| 2 | D*2 | 1,32 | 74 | 27 | 46 |
| 3 | D*3 | 2,67 | 69 | 32 | 45 |
| 4 | D*4 | 8,22 | 47 | > 40 | 37 |
| 5 Vergleich | D*5 | 0 | 95 | 2 | 44 |
| 6 | D*6 | 1,32 | 94 | 4 | 47 |
| 7 | D*7 | 2,67 | 78 | 8 | 45 |
| 8 | D*8 | 8,22 | 56 | 32 | 35 |

Wie Tabelle 2 zeigt, verbessert sich durch Zusatz der erfindungsgemäßer Pulvermischung D* die Benzinbeständigkeit, der Glanzgrad wird reduziert; trotz der Anwesenheit von ungepfropftem Polybutadienkautschuk bleibt das Zähigkeitsniveau erhalten bzw. wird sogar leicht verbessert.

Dabei stellen die Beispielserien 1 bis 4 sowie 5 bis 8 jeweils untereinander vergleichbare Formmassen dar (jeweils gleiche Pfropfpolymerisatkomponente in D* bei 1 bis 4 und bei 5 bis 8). Vergleichsbeispiele ohne D sind 1 und 5. Trotz des unterschiedlichen Ausgangsniveaus hinsichtlich Benzinbeständigkeit und Glanzgrad beim Einsatz verschiedener Pfropfpolymerisatkomponenten in D* (Vergleich 1 und 5) resultiert in jedem Fall eine Verbesserung dieser Eigenschaften bei Verwendung erfindungsgemäßer Pulverkompositionen D* (mit ungepfropftem Polybutadienkautschuk D).

**Patentansprüche**

1. Verfahren zur Herstellung von thermoplastischen Formmassen, wobei man die Komponenten

   A. 10 bis 99 Gew.-Teile Polycarbonat oder Polyestercarbonat

   B. 0 bis 90 Gew.-Teile eines mit Komponente A. verträglichen oder teilverträglichen kautschukfreien Harzes,

   C. 0 bis 90 Gew.-Teile eines mit Komponente A. verträglichen oder teilverträglichen kautschukmodifizierten Harzes,

   D. 0,5 bis 10 Gew.-Teile, bezogen auf 100 Gew.-Teile aus A + B + C, einer mit Komponente A unverträglichen Kautschukkomponente mit einer Glasübergangstemperatur kleiner als 0°C.

   miteinander vermischt dadurch gekennzeichnet, daß die Komponente D in Form einer Pulvermischung D* eingesetzt wird, die hergestellt wird aus

   a. 1 bis 50 Gew.-Teilen einer ungepfropften teilchenförmigen Kautschukkomponente gemäß D mit einer Glasübergangstemperatur < 0°C und einem mittleren Teilchendurchmesser $d_{50}$ von 0,05 bis 5 µm in Latexform, und

   b. 50 bis 99 Gew.-Teilen der Komponente B, der Komponente C oder einer Mischung aus Komponente B und C in Latexform,

   wobei die unter a. und b. angegebenen Komponenten zunächst als Latices miteinander vermischt werden, und dann gemeinsam zu einer Pulvermischung D* aufgearbeitet werden, und der Gesamtgehalt der über D* in die Formmassen eingebrachten Mengen an Kautschukkomponente D., bezogen auf 100 Gew.-Teilen aus A + B + C, zwischen 0,5 und 10 Gew.-Teilen liegen muß und der Gesamtgehalt an Komponente B, C oder einer Mischung aus Komponente B und C inklusive der über D* in die Formmassen eingebrachten Mengen 90 Gew.-Teile, bezogen auf 100 Gew.-Teile A + B + C, nicht übersteigen darf.

2. Verfahren gemäß Anspruch 1, dadurch gekennzeichnet, daß die Komponente D* aus einer Latexmischung von 2 bis 30 Gew.-Teilen a. und 70 bis 98 Gew.-Teilen b. hergestellt wird.

3. Verfahren gemäß Anspruch 1, dadurch gekennzeichnet, daß Komponente A ein Polycarbonat auf Basis von Diphenolen der Formel (I)

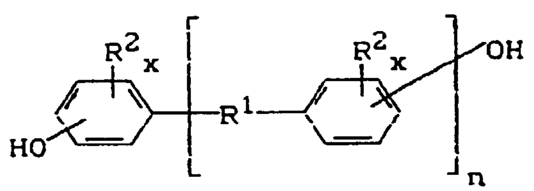

(I)

wobei

$R^1$ eine Einfachbindung, ein $C_1$-$C_5$-Alkylen, $C_2$-$C_5$-Alkyliden, $C_5$-$C_6$-Cycloalkyliden, -O-, -SO-,

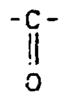 , -S- , 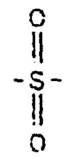 , 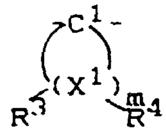

oder ein Rest der Formel (II)

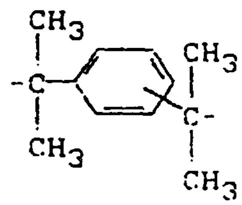 (II)

| | |
|---|---|
| $R^2$ | Chlor, Brom |
| x | 0, 1 oder 2, |
| n | 1 oder 0 sind, und |
| $R^3$ und $R^4$ | für jedes $X^1$ individuell wählbar, unabhängig voneinander Wasserstoff oder $C_1$-$C_6$-Alkyl und |
| $X^1$ | Kohlenstoff und |
| m | eine ganze zahl von 4 bis 7, bevorzugt 4 oder 5 bedeuten, welches 1 bis 25 Gew.-% (bezogen auf die Gesamtmenge an einzusetzenden Diphenolen) Diphenolen der Formel (III) enthalten kann. |

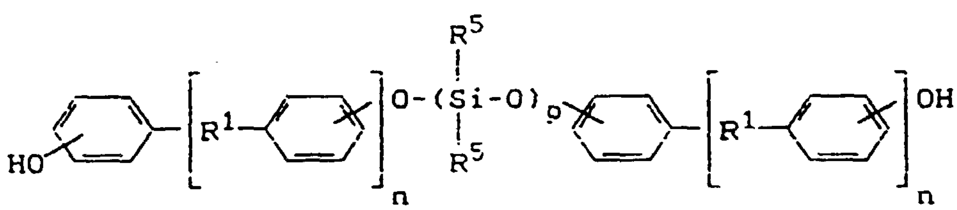

(III)

worin

| | |
|---|---|
| $R^1$ | die für Formel (I) genannte Bedeutung hat, |
| n | 1 oder null ist, |
| $R^5$ | gleich oder verschieden ist und ein lineares $C_1$-$C_{20}$-Alkyl, verzweigtes $C_3$-$C_{20}$-Alkyl oder $C_6$-$C_{20}$-Aryl, vorzugsweise $CH_3$, ist und |
| p | eine ganze Zahl zwischen 5 und 100, vorzugsweise zwischen 20 und 80 ist. |

**4.** Verfahren gemäß Anspruch 1, dadurch gekennzeichnet, daß Komponente B ein Copolymerisat ist, hergestellt aus

B.1 50 bis 99 Gew.-Teilen Vinylaromaten, kernsubstituierten Vinylaromaten, Methacrylsäure-($C_1$-$C_4$)-alkylester oder Gemische davon,

B.2 1 bis 50 Gew.-Teilen Vinylcyaniden, (Meth)-Acrylsäure-($C_1$-$C_8$)-Alkylester, ungesättigte Carbonsäuren, Derivate ungesättigter Carbonsäuren oder Gemische davon.

**5.** Verfahren gemäß Anspruch 1, dadurch gekennzeichnet, daß Komponente B ein Polyalkylenterephthalat ist.

**6.** Verfahren gemäß Anspruch 1, dadurch gekennzeichnet, daß Komponente C ein kautschukmodifiziertes Polymerisat ist, hergestellt durch Pfropfcopolymerisation von

C.1 10 bis 95 Gew.-Teilen Monomeren auf

C.2 5 bis 90 Gew.-Teilen kautschukelastische Grundlagen.

**7.** Verfahren gemäß Anspruch 1, dadurch gekennzeichnet, daß die Monomeren C.1 Gemische sind aus

C.1.1 50 bis 99 Gew.-Teilen Vinylaromaten, kernsubstituierten Vinylaromaten, Methacrylsäure-($C_1$-$C_4$)-Alkylester oder Gemische davon

C.1.2 1 bis 50 Gew.-Teilen Vinylcyanide, (Meth)Acrylsäure-($C_1$-$C_8$)-Alkylester, ungesättigte Carbonsäuren, Derivate ungesättigter Carbonsäuren oder Gemische davon

**8.** Verfahren gemäß Anspruch 1, dadurch gekennzeichnet, daß die Komponente C.2 ein Polybutadien- oder Acrylatkautschuk ist.

**9.** Verfahren gemäß Anspruch 1, dadurch gekennzeichnet, daß sie mindestens einen Zusatz aus der Gruppe der Stabilisatoren, Pigmente, Entformungsmittel, Fließhilfsmittel, Füll- und Verstärkungsstoffe, Flammschutzmittel und Antistatika enthalten.

**Claims**

**1.** Process for the production of thermoplastic moulding compositions, wherein the components

A. 10 to 99 parts by weight polycarbonate or polyestercarbonate,

B. 0 to 90 parts by weight of a rubber-free resin, compatible or partly compatible with component A,

C. 0 to 90 parts by weight of a rubber-modified resin, compatible or partly compatible with component A, and

D. 0.5 to 10 parts by weight, based on 100 parts by weight of A + B + C, of a rubber component, incompatible with component A, having a glass transition temperature below 0 °C are mixed together,

characterized in that component D is used in the form of a powder mixture D*, which is produced from

a. 1 to 50 parts by weight of an ungrafted particulate rubber component according to D having a glass transition temperature < 0°C and an average particle diameter $d_{50}$ of 0.05 to 5 µm in latex form and

b. 50 to 99 parts by weight of component B, component C or a mixture of components B and C in latex form,

wherein the components indicated under a and b are first mixed together as latices and then worked up together to a powder mixture D*, and the total content of the quantities of rubber component D, based on 100 parts by weight of A + B + C, introduced into the moulding compositions via D* must be between 0.5 and 10 parts by weight and the total content of component B, C or a mixture of components B and C including the amounts introduced into the moulding compositions via D* must not exceed 90 parts by weight, based on 100 parts by weight of A + B + C.

**2.** Process according to claim 1, characterized in that component D* is produced from a latex mixture of 2 to 30 parts by weight of a and 70 to 98 parts by weight of b.

**3.** Process according to claim 1, characterized in that component A is a polycarbonate based on diphenols of formula (I)

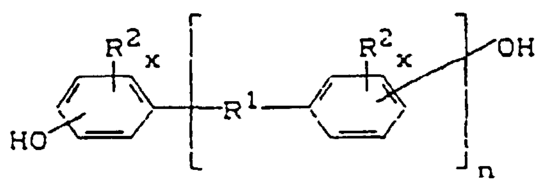

(I)

wherein

| | |
|---|---|
| $R^1$ | is a single bond, a $C_1$-$C_5$ alkylene, $C_2$-$C_5$ alkylidene, $C_5$-$C_6$ cycloalkylidene, -O-, -SO-, |

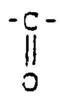 , -S- , 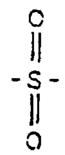 , 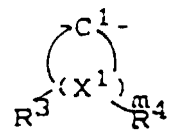

or a group of formula (II),

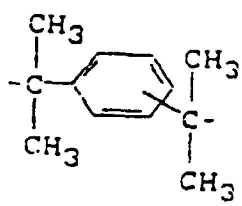

(II)

| | |
|---|---|
| $R^2$ | is chlorine, bromine, |
| x | = 0, 1 or 2, |
| n | = 1 or 0, and |
| $R^3$ and $R^4$, | which may be individually selected for each $X^1$, independently of each other represent hydrogen or $C_1$-$C_6$ alkyl and |
| $X^1$ | represents carbon and |
| m | an integer from 4 to 7, preferably 4 or 5, |

which may contain 1 to 25 wt.% (based on the total amount of diphenols to be used) of diphenols of formula (III),

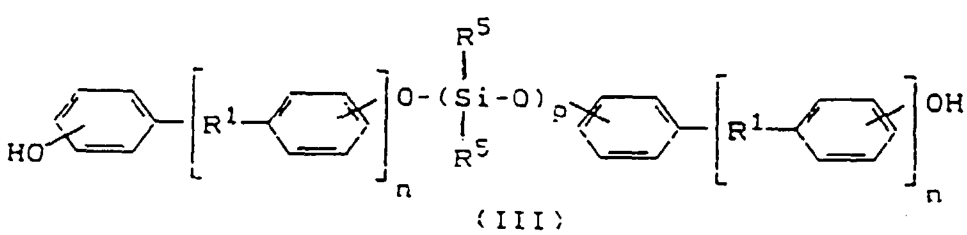

(III)

wherein

| | |
|---|---|
| $R^1$ | has the meaning named for formula (I), |
| n | = 1 or 0, |
| the $R^5$'s | are the same or different and represent a linear $C_1$-$C_{20}$ alkyl, branched $C_3$-$C_{20}$ alkyl or $C_6$-$C_{20}$ aryl, preferably $CH_3$, and |
| p | is an integer between 5 and 100, preferably between 20 and 80. |

**4.** Process according to claim 1, characterized in that component B is a copolymer, produced from

B.1 50 to 99 parts by weight vinyl aromatic compounds, vinyl aromatic compounds substituted in the ring, $C_1$-$C_4$ alkyl methacrylates or mixtures thereof and

B.2 1 to 50 parts by weight vinyl cyanides, $C_1$-$C_8$ alkyl (meth)acrylates, unsaturated carboxylic acids, derivatives of unsaturated carboxylic acids or mixtures thereof.

**5.** Process according to claim 1, characterized in that component B is a polyalkylene terephthalate.

**6.** Process according to claim 1, characterized in that component C is a rubber-modified polymer, produced by graft copolymerization of

C.1 10 to 95 parts by weight monomers onto

C.2 5 to 90 parts by weight rubber-elastic backbones.

**7.** Process according to claim 1, characterized in that monomers C.1 are mixtures of

C.1.1 50 to 99 parts by weight vinyl aromatic compounds, vinyl aromatic compounds substituted in the ring, $C_1$-$C_4$ alkyl methacrylates or mixtures thereof

C.1.2 1 to 50 parts by weight vinyl cyanides, $C_1$-$C_8$ alkyl (meth)acrylates, unsaturated carboxylic acids, derivatives of unsaturated carboxylic acids or mixtures thereof.

**8.** Process according to claim 1, characterized in that component C.2 is a polybutadiene rubber or acrylate rubber.

**9.** Processes according to claim 1, characterized in that they contain at least one additive from the group of stabilizers, pigments, mould-release agents, flow aids, fillers and reinforcing materials, flameproofing agents and antistatic agents.

## Revendications

**1.** Procédé de préparation de matières à mouler thermoplastique par mélange entre eux des composants suivants :

A) 10 à 99 parties en poids d'un polycarbonate ou d'un polyestercarbonate,
B) 0 à 90 parties en poids d'une résine exempte de caoutchoucs, compatible en totalité ou en partie avec le composant A,
C) 0 à 90 parties en poids d'une résine modifiée par un caoutchouc, compatible en totalité ou en partie avec le composant A,
D) 0,5 à 10 parties en poids, pour 100 parties en poids de A+B+C, d'un composant caoutchouc ayant une température de transition du second ordre inférieure à 0°C et non compatible avec le composant A,

caractérisé en ce que le composant D est mis en oeuvre sous la forme d'un mélange pulvérulent D*, préparé à partir de

a) 1 à 50 parties en poids d'un composant caoutchouc non greffé, à l'état de particules, du type D à une température de transition du second ordre inférieure à 0°C et un diamètre de particule moyen $d_{50}$ de 0,05 à 5 µm, à l'état de latex, et

b) 50 à 99 parties en poids du composant B, du composant C ou d'un mélange des composants B et C, à l'état de latex,

les composants a. et b. étant d'abord mélangés entre eux à l'état de latex puis transformés ensemble en un mélange pulvérulent D*, la teneur totale du composant caoutchouc D introduit dans les matières à mouler par l'intermédiaire de D* devant se situer entre 0,5 et 10 parties en poids pour 100 parties en poids de (A+B+C) et la teneur totale en le composant B, C ou un mélange du composant B et du composant C, y compris les quantités introduites dans les matières à mouler par l'intermédiaire de D*, ne devant pas dépasser 90 parties en poids pour 100 parties en poids de (A+B+C).

**2.** Procédé selon la revendication 1, caractérisé en ce que le composant D* est préparé à partir d'un mélange de latex de 2 à 30 parties en poids de a. et 70 à 98 parties en poids de b.

**3.** Procédé selon la revendication 1, caractérisé en ce que le composant A est un polycarbonate à base de diphénols de formule (1).

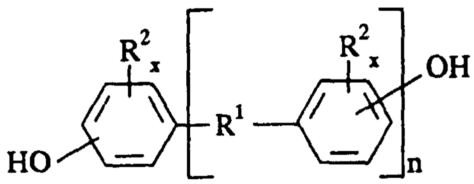

(I)

dans laquelle

$R^1$ représente une liaison simple, un groupe alkylène en $C_1$-$C_5$, alkylidène en $C_2$-$C_5$, cycloalkylidène en $C_5$-$C_6$, -O-, -SO-,

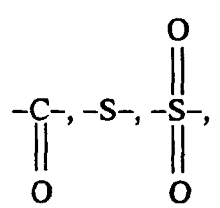

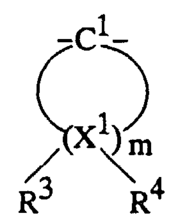

ou un groupe de formule (II)

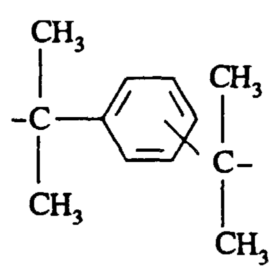

(II)

$R^2$ représente le chlore, le brome,
x est égal à 0, 1 ou 2,
n est égal à 1 ou 0, et
$R^3$ et $R^4$, qu'on peut choisir individuellement pour chaque substituant $X^1$, représentent chacun, indépendamment l'un de l'autre, l'hydrogène ou un groupe alkyle en $C_1$-$C_6$ et

$X^1$ représente le carbone,
m étant un nombre entier allant de 4 à 7 et de préférence égal à 4 ou 5,
qui peut contenir de 1 à 25 % en poids (par rapport à la quantité totale des diphénols mis en oeuvre) de diphénols de formule (III)

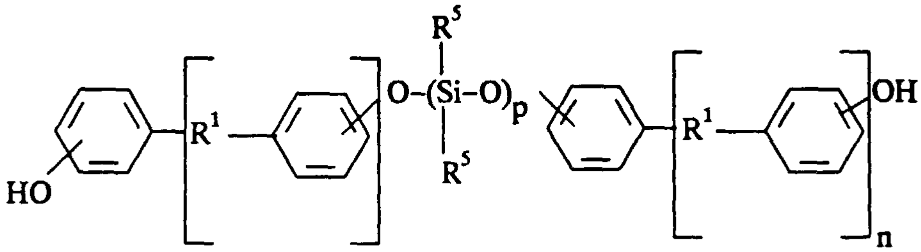

(III)

dans laquelle

$R^1$ a les signification indiquées en référence à la formule (I),
n est égal à 1 ou 0,
les symboles $R^5$, ayant des significations identiques ou différentes, représentent chacun un groupe alkyle à chaîne droite en $C_1$-$C_{20}$, alkyle à chaîne ramifiée en $C_3$-$C_{20}$ ou groupe aryle en $C_6$-$C_{20}$, mais de préférence $CH_3$ et
p est un nombre entier allant de 5 à 100, de préférence de 20 à 80.

**4.** Procédé selon la revendication 1, caractérisé en ce que le composant B est un copolymère préparé à partir de

B.1 50 à 99 parties en poids de monomères vinylaromatiques, de monomères vinylaromatiques substitués dans les noyaux, de méthacrylates d'alkyle en $C_1$-$C_4$ ou leurs mélanges,
B.2 1 à 50 parties en poids de cyanures de vinyle, de (méth)acrylates d'alkyle en $C_1$-$C_8$, d'acides carboxyliques insaturés, de dérivés d'acides carboxyliques insaturés ou leurs mélanges.

**5.** Procédé selon la revendication 1, caractérisé en ce que le composant B est un téréphtalate de polyalkylène.

**6.** Procédé selon la revendication 1, caractérisé en ce que le composant C est un polymère modifié par un caoutchouc, préparé par copolymérisation greffée de

C.1 10 à 95 parties en poids de monomères sur
C.2 5 à 90 parties en poids de supports élastiques du type caoutchouc.

**7.** Procédé selon la revendication 1, caractérisé en ce que les monomères C.1 sont des mélanges de

C.1.1 50 à 99 parties en poids de composés vinylaromatiques, de composés vinylaromatiques substitués dans les noyaux, de méthacrylates d'alkyle en $C_1$-$C_4$ ou leurs mélanges,
C.1.2 1 à 50 parties en poids de cyanures de vinyle, de (méth)acrylates d'alkyle en $C_1$-$C_8$, d'acides carboxyliques insaturés, de dérivés d'acide carboxyliques insaturés ou leurs mélanges.

**8.** Procédé selon la revendication 1, caractérisé en ce que le composant C.2 est un caoutchouc de polybutadiène ou d'acrylates.

**9.** Procédé selon la revendication 1, caractérisé en ce que les matières à mouler contiennent au moins un additif pris dans le groupe formé par les stabilisants, les pigments, les agents de démoulage, les produits auxiliaires fluidifiants, les matières de charge, les matières renforçantes, les agents ignifugeants et les agents antistatiques.